Europäisches Patentamt

European Patent Office

Office européen des brevets

(19)

(11) Veröffentlichungsnummer: **0 280 364**

**A1**

(12) **EUROPÄISCHE PATENTANMELDUNG**

(21) Anmeldenummer: 88200284.3

(22) Anmeldetag: 09.02.88

(51) Int. Cl.⁴: **C10B 53/00** , B09B 3/00 , B09B 5/00

(30) Priorität: 10.02.87 DE 3703984

(43) Veröffentlichungstag der Anmeldung:
31.08.88 Patentblatt 88/35

(84) Benannte Vertragsstaaten:
ES GR

(71) Anmelder: **TECHNISCHE WERKE DER STADT STUTTGART AG**
**Lautenschlagerstrasse 21**
**D-7000 Stuttgart 1(DE)**

(72) Erfinder: **Auchter, Engelbert**
**Einsteinstrasse 5**
**D-7000 Stuttgart 50(DE)**
Erfinder: **Hagenmaier, Hanspaul, Prof. Dr.**
**Wilhelmstrasse 7**
**D-7400 Tübingen(DE)**

(74) Vertreter: **Dreiss, Hosenthien & Fuhlendorf**
**Gerokstrasse 6**
**D-7000 Stuttgart 1(DE)**

(54) **Einrichtung zur Zerstörung von halogenierten Aromaten, wie chlorierte Dibenzodioxine, chlorierte Dibenzofurane oder dgl., in Flugaschen aus Abfallverbrennungsanlagen.**

(57) Eine Einrichtung zur Zerstörung von halogenierten Aromaten, wie chlorierte Dibenzodioxine, chlorierte Dibenzofurane oder dgl., in Flugaschen aus Abfallverbrennungsanlagen weist einen Behälter (10) und eine Fördervorrichtung (11) zum Transport von Flugasche durch einen Raum (18) des Behälters (10) auf. Der Raum (18) des Behälters (10) ist von der äußeren Atmosphäre abgeschlossen und ist auf einer Temperatur im Bereich zwischen 250° bis 450° C gehalten. Die Temperatur und die Verweildauer der Flugasche im Innenraum (18) ist so haltbar, daß eine Zerstörung der halogenierten Aromaten erfolgt.

FIG. 1

EP 0 280 364 A1

## Einrichtung zur Zerstörung von halogenierten Aromaten, wie chlorierte Dibenzodioxine, chlorierte Dibenzofurane oder dgl., in Flugaschen aus Abfallverbrennungsanlagen.

Halogenierte Aromaten, wie chlorierte Dibenzodioxine, chlorierte Dibenzofurane oder, als weitere Vertreter chlorierte Biphenyle, sind hochtoxische karzinogene Verbindungen. Insbesondere die Polychlordibenzo-para-dioxine (PCDD) und Polychlordibenzofurane (PCDF) sind in vergangener Zeit in den Mittelpunkt einer kontroversen Auseinandersetzung geraten, da sie in zahlreiche Vorfälle verwickelt waren. Die Freisetzung von 2,3,7,8-Tetrachlordibenzo-para-dioxin (2,3,7,8-TCDD) in Seveso Italien 1976 brachte die Gefährlichkeit dieser Verbindungsklasse in das Bewußtsein der breiten Öffentlichkeit. Zahlreiche wissenschaftliche Untersuchungen wurden in der Folgezeit angestellt, um die Entstehung und Verbreitung von halogenierten Aromaten, insbesondere von PCDD und PCDF, zu erforschen. Dabei wurde festgestellt, daß sich PCDD und PCDF in Spuren als Verunreinigung in industriell erzeugten organischen Verbindungen, wie chlorierte Phenole, Phenoxyherbizide finden. Verbrennungsvorgänge allgemein, insbesondere aber die Müllverbrennung, können zur Freisetzung von PCDD und PCDF führen, wobei es durch als latente Ausgesetztsein zur Beeinträchtigung von Mensch und Umwelt kommen kann (so Hutzinger et al, Chemie in unserer Zeit 20. Jahrgang 1986, Heft Nr. 5, S. 165).

Die in Abfallverbrennungsanlagen anfallenden Flugaschen enthalten beachtliche Mengen an PCDD bzw. PCDF. Das kann dazu führen, daß die Flugaschen als Sondermüll in besonderen Deponien gelagert werden müssen. Steht diese Möglichkeit nicht in ausreichendem Maße zur Verfügung, bleibt als Konsequenz die Müllverbrennung einzustellen. Neben wirtschaftlichen Gesichtspunkten ist die latente Gefährdung der Umwelt durch derartige Deponien, in denen eine Anhäufung an hochtoxischen Stoffen vorliegt, zu beachten. Unfälle aus jüngster Zeit haben gezeigt, daß in Sickerwässern derartiger Deponien erhebliche Mengen an PCDD/PCDF festzustellen sind, so daß selbst bei vorsorglicher Lagerung der Flugasche unter Tage darin ein permanenter Gefahrenherd zu sehen ist.

Der jährlich in der Bundesrepublik Deutschland anfallende "Hausmüllberg" is 1985 auf ein Gewicht von 28 Mio Tonnen angewachsen. Etwa ein Drittel dieser Müllmenge wird bundesweit in den mittlererweile bestehenden 46 Müllverbrennungsanlagen verarbeitet. Die dabei anfallende Menge von Flugasche ist erheblich. Bei einem herkömmlichen Müllverbrennungsofen mit einem Stundendurchsatz von etwa 20 Tonnen pro Stunde fallen ca. 600 - 800 kg Flugasche an. Die Summe der PCDD/PCDF Konzentration bspw. liegt dabei im Bereich bis zu 1000 ng pro g Flugasche.

Zahlreiche Untersuchungen haben sich mit der Entstehung von halogenierten Aromaten als Bestandteil von Flugaschen beschäftigt.

Dabei konnte an Flugaschen aus verschiedenen Abfallverbrennungsanlagen gezeigt werden, daß katalytische Effekte in den Flugaschen selbst eine entscheidene Rolle bei der Bildung und Zerstörung von PCDD/PCDF in Müllverbrennungsanlagen Spielen dürften.

(Hagenmaier et al., 6. Internationales Dioxin-Symposium in Fukoka (Japan) im Septemper 1986 bzw. Vortrag vom 14.11.1986 auf der VGB-Tagung in Essen; VBG = Technische Vereinigung der Großkraftwerkbetreiber e.V.) Nach diesen Untersuchungen katalysieren Flugaschen im Bereich um 300°C unter "Sauerstoff-Überschuß"-Bedingungen die de novo Synthese von PCDD und PCDF aus Metallchloriden, die im Sinne einer Deacon-Reation, mit der Bildung von Chlor startet. Damit werden die von Vogg und Stieglitz beim 5. Internationalen Dioxin-Symposium in Bayreuth im Septemper 1985 vorgetragenen Beobachtungen bestätigt und ein Mechanismus für diese PCDD-und PCDF-Synthese vorgeschlagen. Andererseits wird unter "Sauerstoff-Mangel"-Bedingungen im selben Temperaturbereich eine drastische Erniedrigung der PCDD/PCDF-Konzentration durch die katalytische Wirkung der Flugaschen erzielt.

Weitere Untersuchungen von H. Hagenmaier haben gezeigt, daß dadurch ein Abbau von halogenierten Aromaten rasch und nahezu vollständig erreicht werden kann.

Stellt man sich die allein in der Bundesrepublik alltäglich im Tonnenmaßstab anfallenden Mengen an Flugasche vor, so birgt die nach dem gegenwärtigen Stand der Technik durchgeführte Endlagerung in Deponien, neben der zuvor genannten Gefahr durch Sickerwässer, eine weitere erhebliche Gefahr der Freisetzung von PCDD und PCDF in sich. Erfolgt eine Erhitzung von Flugasche infolge eines Unfalles bspw. bei einem Transport oder aufgrund eines Schwelbrandes auf einer Deponie auf etwa 300°C, so ist eine Bildung von erheblichen Mengen an hochgiftigen Substanzen zu befürchten.

Aufgabe der vorliegenden Erfindung ist eine Einrichtung der eingangs genannten Art zu schaffen, die unter Einsatz konstruktiv einfacher Mittel ein zuverlässiges und wirtschaftliches Zerstören von halogenierten Aromaten in Flugaschen aus Abfallverbrennungsanlagen ermöglicht. Wirtschaftlich Arbeiten bedeutet hier außerden, daß die Einrichtung an wechselnd anfallende Mengen an Flugaschen mit variierenden Schadstoffgehalten anpassbar ist.

Erfindungsgemäß wird die Aufgabe dadurch gelöst, daß ein Behälter und eine Fördervorrichtung zum Transport von Flugasche durch einen Raum des Behälters vorgesehen ist, daß der Raum des Behälters von der äußeren Atmosphäre abgeschlossen und auf einer Temperatur im Bereich zwischen 250° und 450° C gehalten ist, wobei die Temperatur und die Verweildauer der Flugasche im Raum so haltbar ist, daß eine Zerstörung der halogenierten Aromaten erfolgt.

Der von der äußeren Atmosphäre abgeschlossene Raum des beheizbaren Behälters ermöglicht ein Behandeln der Flugasche unter "Sauerstoff-Mangel"-Bedingungen. Im Temperaturbereich von 250° - 450° C erfolgt eine Zerstörung der in Flugaschen vorkommenden halogenierten Aromaten. Die Fördervorrichtung ermöglicht dabei einen Transport von Flugasche durch den Innenraum des Behälters, so daß eine kontinuierliche Arbeitsweise durchgeführt werden kann. Eine Variation der Fördergeschwindigkeit der Fördervorrichtung und eine Änderung der Temperatur im Bereich zwischen 250° und 450° C ermöglicht ein flexibles Anpassen an die jeweilig anfallende Menge der Flugasche und an den darin vorhanderen Gehalt an zu zerstörenden halogenierten Aromaten.

Besonders vorteilhaft besteht die Fördervorrichtung aus einer Eintrag-und Austragvorrichtung und einer Transportvorrichtung, wobei die Eintragvorrichtung aus einem Vorratsbehälter und einer senkrecht darunter angeordneten Schleuse mit zwei Absperrorganen, die so schaltbar sind, daß der Raum immer von der äußeren Atmosphäre abgeschlossen ist, sowie einer daran anschließenden Verbindung zum Raum des Behälters besteht, und die Austragvorrichtung eine Schleuse aufweist, deren Absperrorgane so schaltbar sind, daß der Raum immer von der äußeren Atmosphäre abgeschlossen ist, wobei die Austragvorrichtung im Schleusenbereich mit einer Kühlung versehen ist. Die Schleusen stellen durch eine besonders konstruktiv einfache Maßnahme sicher, daß der Materialein-und austrag so verläuft, daß der Raum nicht mit dem Sauerstoff der äußeren Atmosphäre in Berührung kommt. Die Schleusen stellen somit eine "Dichtung" zwischen der äußeren Atmosphäre und dem Raum des Behälters dar. Die Kühlung im Schleusenbereich der Austragvorrichtung ermöglicht ein Abkühlen der Flugasche, bevor diese wieder mit der Außenluft in Berührung kommt. Dadurch ist sichergestellt, daß jegliche Reaktionen zwischen dem Luftsauerstoff und der heißen Flugasche ausgeschlossen ist.

In einer besonders konstruktiv einfachen Ausgestaltung weist der Behälter ein erstes Rohr auf, dessen eines Ende mit der Eintrag-und dessen anderes Ende mit der Austragvorrichtung verbunden ist, wobei ein Innenraum des ersten Rohres den Raum des Behälters bildet.

Eine besonders wirtschaftliche und konstruktiv einfache Ausgestaltung besteht darin, daß das Rohr geneigt angeordnet ist. Durch eine Neigung des Rohres wird der Transport der Flugasche, die aus kleinen Feststoffpartikeln besteht, unter Ausnutzung der Schwerkraft erleichtert.

Eine gute Durchmischung mit damit verbundenem Wärmetausch und ein stetiger Transport von Flugasche ist dadurch erreicht, daß die Transportvorrichtung durch ein im ersten Rohr verlaufende antreibbare Welle besteht, auf der Paddel zur Durchmischung im und Förderung durch das Rohr angeordnet sind. Eine besonders gute stetige Durchmischung unter hervorragendem Wärmeaustausch und stetigem Weitertransport wird durch die Ausgestaltung bzw. Anordnung der Paddel gemäß dem Ansprüchen 8, 9 und 10 erreicht.

Zum Ablassen evtl. gasförmiger Bestandteile, die beim Zerstörungsprozeß auftreten, kann am stationär angeordneten Rohr an der Stirnfläche am Austragende ein Ventil vorgesehen sein.

Eine besonders konstruktiv einfache Maßnahme zum Durchmischen und Transport der Flugasche besteht darin, daß der Behälter ein an den Stirnseiten mit je einer Achswelle versehenes drehbares erstes inneres Rohr aufweist, an dessen Innenwand mehrere Paddel angeordnet sind. Diese Ausgestaltung ist in Verbindung mit einer geneigten Anordnung des Rohres konstruktiv einfach und äußerst wirtschaftlich.

Eine genau dosierbare und stetige Zu-bzw. Abfuhr von Flugasche besteht darin, daß die Eintrag-und Austragvorrichtung zusätzlich Schnecken aufweisen, die in den als Hohlwellen ausgebildeten Achswellen des ersten inneren Rohres verlaufen.

Ein besonders wirtschaftlicher Betrieb einer erfindungsgemäßen Einrichtung ist dadurch erreicht, daß das erste Rohr im Bereich zwischen den Stirnseiten in einem Heizkessel einer Abfallverbrennungsanlage angeordnet ist, so daß eine Beheizung des Rohres direkt im Kessel durch die Verbrennungsgase erfolgt. Diese Anordnung ermöglicht einfach einen nachträglichen Einbau in einen Heizkessel einer bereits vorhandenen Abfallverbrennungsanlage, wobei ohne erhebliche Störung der Strömungsverhältnisse und Wärmegradienten in einem derartigen Heizkessel eine kostengünstiges Halten der Temperatur der Flugasche durchgeführt werden kann. Weitere vorteilhafte Ausgestaltungen sind den Unteransprüchen 15 und 16 zu entnehmen.

Die Erfindung wird nachstehend in einigen bevorzugten Ausführungsbeispielen anhand der Zeichnungen näher erläutert.

Es Zeigt:

3

Figure 1 schematisch einen Längsschnitt eines ersten erfindungsgemäßen Ausführungsbeispiels mit einer Teilansicht einer mit Paddel versehenen Antriebswelle,

Figur 2 schematisch einen Längsschnitt eines zweiten Ausführungsbeispiels,

Figur 3 schematisch einen Schnitt längs der Linie III-III in Fig. 2,

Figur 4 schematisch einen Längsschnitt eines dritten Ausführungsbeispiels,

Figur 5 schematisch einen Schnitt längs der Linien V-V in Fig. 4,

Figur 6 schematisch einen Schnitt längs der Linien VI-VI in Fig. 4,

Figur 7 schematisch einen Längsschnitt eines dritten Ausführungsbeispiels, und

Figur 8 schematisch einen Schnitt einer Müllverbrennungsanlage mit einer erfindungsgemäßen Einrichtung.

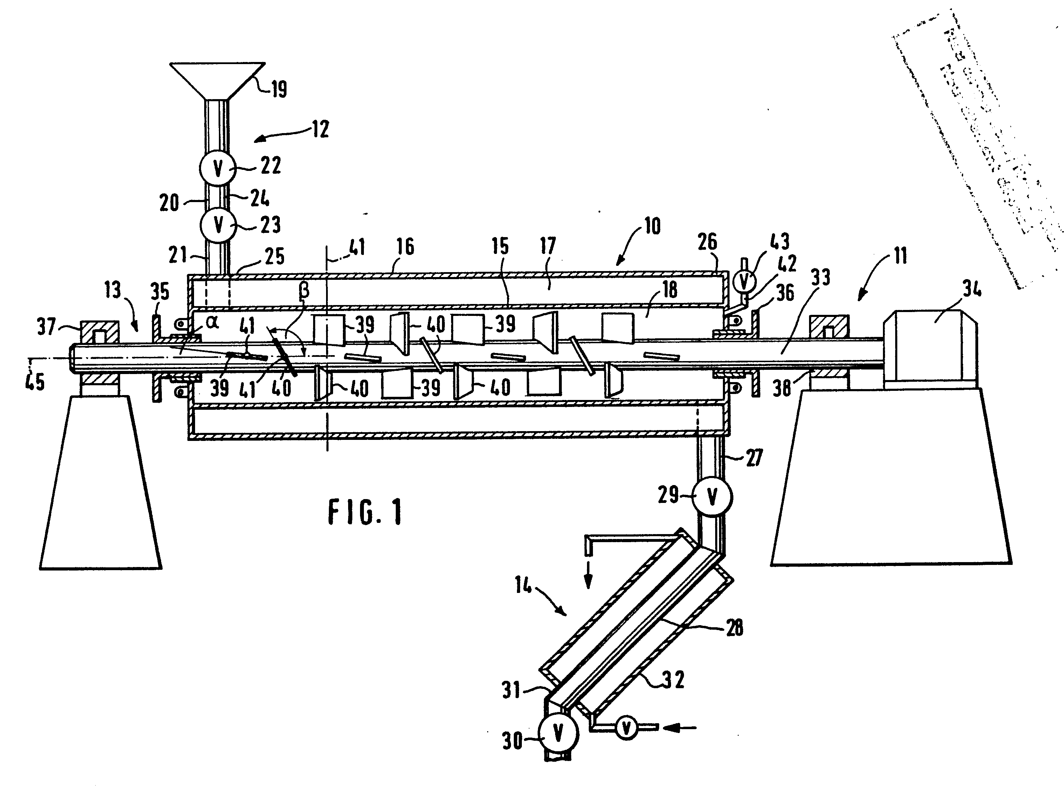

Eine in Fig. 1 aufgezeigte erfindungsgemäße Einrichtung weist einen Behälter 10 und eine Fördervorrichtung 11 auf, die aus einer Eintragvorrichtung 12 einer Transportvorrichtung 13 und einer Austragvorrichtung 14 besteht.

Der Behälter 10 besteht aus einem ersten inneren Rohr 15 und einem zweiten koaxialen Rohr 16 mit größerem Durchmesser, jeweils mit geschlossenen Stirnflächen. Zwischen den beiden Rohren 15 und 16 wird ein ringförmiger Raum 17 gebildet, der zur Aufnahme eines Heizmediums dient, um dadurch einen Innenraum 18 des ersten Rohres 15 zu erwärmen. Das Rohr 16 weist dabei hier nicht aufgezeigte Öffnungen auf, damit das Heizmedium in bzw. aus dem Raum 17 strömen kann. Die Eintragvorrichtung 12 weist einen Vorratsbehälter 19, eine Schleuse 20 und eine Verbindungsleitung 21 zum Innenraum 18 des ersten Rohres 15 auf.

Die Schleuse 20 weist einen ersten Schieber 22 und einen zweiten Schieber 23 auf. Zwischen den beiden Schiebern 22 und 23 ist ein Schleusenraum 24 vorgesehen.

Die Eintragvorrichtung 12 ist an einem ersten Endbereich 25 des ersten bzw. zweiten Rohres 15 bzw. 16 angeordnet, wobei die Transportrichtung des durch die Eintragvorrichtung 12 durchlaufenden Materials etwa senkrecht zur Längsachse 45 des ersten Rohres 15 verläuft.

Die Austragvorrichtung 14 ist an einem zweiten, dem ersten Endbereich 25 entgegengesetzt liegenden, Endbereich 26 des Rohres 16 angeordnet und weist eine Austragleitung 27 und eine Schleuse 28 auf. Die Schleuse 28 enthält einen dritten Schieber 29 und einen vierten Schieber 30. Der durch die Schieber 29, 30 umgrenzte Schleusenbereich 31 ist mit einer Kühlung 32 versehen, die, wie in Fig. 1 durch die Pfeile angezeigt, von unten nach oben von einem Kühlmedium durchströmt wird. Die Transportrichtung des Materials durch die Austragvorrichtung 14 verläuft senkrecht zur Längsachse 45 des ersten Rohres 15 und ist gleichsinnig, zur der Materialeintragsrichtung.

Die Transportvorrichtung 13 besteht aus einer Welle 33, die von einem steuerbaren Motor 34 angetrieben wird. Die Welle 33 verläuft koaxial mit dem ersten bzw. zweiten Rohr 15 bzw. 16 und durchstößt deren geschlossene Stirnseiten. Die Welle 33 ist über Dichtungen 35, 36 drehbar in den Stirnseiten der ortsfesten Rohre 15, 16 gelagert. Die Dichtungen 35, 36 bestehen dabei entweder aus Gleitringdichtungen oder aus Stopfbuchsen. Die Welle 33 ist außerdem in zwei Lagern 37, 38 gelagert.

Auf der Welle 33 sind im Bereich des Innenraums 18 des ersten Rohres 15 erste bzw. zweite Paddel 39 bzw. 40 angeordnet. Jedes erste Paddel 39 liegt, senkrecht zur Längsachse 45 der Welle 33 gesehen, einem zweiten Paddel 40 gegenüber und bilden dabei ein Paddelpaar. Das erste bzw. zweite Paddel 39 bzw. 40 eines jeden Paddelpaares weist eine gemeinsame Längsmittelachse 41 auf, die senkrecht zur Längsachse 45 der Welle 33 steht. Das erste Paddel 39 eines jedes Paddelpaares ist aus einer Ebene, die durch die Längsmittelachse 41 und die Längsachse 45 der Welle 33 gebildet wird, um einen Winkel α, das zweite Paddel 40 dagegen um einen Winkel β verdreht. Der Winkel α, beträgt ca. 10° der Winkel β etwa 60°. Das um ca. 10° verdrehe erste Paddel 39 eines jeden Paddelpaares dient vorwiegend zum Durchmischen der im Innenraum 18 des ersten Rohres 15 aufgenommenen Flugasche. Das um 60° verdrehte zweite Paddel 40 eines jedes Paddelpaares dient neben der Durchmischung, auch zum Weitertransport der Flugasche.

Herkömmliche Flugaschen aus Abfallverbrennungsanlagen sind feinkörnige Pulver, die ab einem Neigungswinkel von 60° aufgrund der Schwerkraft rieseln.

Die Paddelpaare sind in Längsrichtung der Welle 33 so nachfolgend angeordnet, daß die Längsmittelachse 41 eines jeden nachfolgenden Paddelpaars um 90° jeweils in die gleiche Richtung verdreht angeordnet ist. Demzufolge, weist ausgehend von einem Paddelpaar, das diesem in Längsrichtung der Welle 33 gesehene folgende, viertre Paddelpaar, wieder die gleiche Paddelanordnung auf. Durch die wechselnde Anordnung der ersten bzw. zweiten Paddel 39 bzw. 40 und der durch diese gebildeten Paddelpaare ist eine gute Durchmischung und ein stetiger Transport der Flugasche im Innenraum 18 des ersten Rohres 15 gegeben. Außerdem erfolgt ein guter Wärmeaustausch mit der geheizten Fläche des ersten Rohres 15. Die Anordnung der Paddel 39 bzw. 40 im Endbereich 25, 26, d.h. in der Nähe der Eintrag-bzw. Austragstelle, kann von der zuvor genannten abweichen, bspw. um Staubildungen zu verhindern. An der Stirnseite des ersten Rohres 15 im zweiten Endbereich 26 ist eine Ablaßleitung 42 mit einem Ventil 43 vorgesehen. Über das Ventil 43 können im Innenraum 18 entstehende Gase abgelassen werden. Das Ventil 43 ist dabei so ausgebildet, daß der Zutritt von Außenluft in den Innenraum 18 nicht möglich ist.

Die Arbeitsweise der in Fig. 1 aufgezeigten erfindungsgemäßen Einrichtung verläuft wie folgt:

Flugasche aus einer Abfallverbrennungsanlage wird dem Vorratsbehälter 19 zugeführt. Die Flugasche stammt dabei aus Staubabscheidern, wie Zyklone oder Elektrofilter. Die feste feine rieselfähige trockene Flugasche gelangt durch den offenen ersten Schieber 22 in den Schleusenraum 24 der Schleuse 20, wobei der zweite Schieber 23 geschlossen ist. Der Schleusenraum 24 wird dabei so vollgefüllt, daß keine sauerstoffhaltige Atmosphäre mehr vorhanden ist. Nach Schließen des ersten Schiebers 22 fällt die im Schleusenraum 24 befindliche Flugasche durch Öffnen des zweiten Schiebers 23 über die Verbindungsleitung 21 in den Innenraum 18 des ersten Rohres 15. Die vom Motor 34 angetriebene Welle 33 transportiert mittels der Paddel 39, 40 die Flugasche unter stetiger Durchmischung in Richtung Austragvorrichtung 14. Durch den Raum 17 zwischen erstem und zweitem Rohr 15 und 16 strömt ein Heizmedium. Als Heizmedium können direkt die heißen Rauchgase aus einem Heizkessel einer Abfallverbrennungsanlage genommen werden.

Das Heizmedium kann auch von einem separaten Brenner stammen, der, in einer weiteren Ausführung, auch zusätzlich zu der Zuführung der Rauchgase vorgesehen sein kann. Die Beheizung des ersten Rohres 15 kann auch durch eine auf seiner Außenfläche angebrachten elektrischen Hiezung erfolgen. In einer weiteren hier nicht aufgezeigten Ausführung besteht die Eintragsvorrichtung aus einer Zuführungsleitung zum Innenraum des ersten Rohres, die mit einer Füllstandanzeige versehen ist. Dabei ist die Zuführungsleitung immer mit Flugasche gefüllt, so daß die Abdichtung zwischen Innenraum und äußerer Atmosphäre durch die Flugasche selbst erfolgt.

Die am zweiten Endbereich 26 Innenraumes 18 ankommende Flugasche fällt durch die Austragleitung 27 bei geöffneten dritten Schieber 29 und geschlossenem vierten Schieber 30 in den Schleusenbereich 31. Die Flugasche wird dabei durch das die Kühlung 32 durchströmende Kühlmedium bspw. Wasser abgekühlt. Nach Schließen des dritten Schiebers 29 kann die abgekühlte Flugasche bei geöffnetem Schieber 30 abgelassen werden.

Während die Flugasche den Innenraum 18 durchläuft findet durch die katalytischen Prozesse ein Abbau der Dioxine (PCDD) bzw. Furane (PCDF) statt.

In den nachfolgenden Tabellen 1 und 2 sind Ergebnisse von Messungen zusammengestellt, die an einer erfindungsgemäßen Einrichtung, wie sei im Zusammenhang mit Fig. 1 beschrieben ist, durcheführt wurden. Dabei sind in der ersten Spalte die Gehalte an PCDD bzw. PCDF einer unbehandelten Flugaschenprobe (MKS 5) aus einem Kessel einer Müllverbrennungsanlage aufgeführt. In Spalte zwei bzw. drei sind die Ergebnisse nach einstündiger bzw. zweistündiger Behandlung der Probe (MKS 5) bei 400° C aufgelistet.

## Tabelle 1

Bestimmung polychlorierter Dibenzodioxine und Dibenzofurane als Summe der verschiedenen Chlorierungsgrade

Probenart: Flugasche, Kessel 27, vom 07.01.87

| Probennr. | MKS5 unbeh. ng/g | MKS6 1h, 400°C ng/g | MKS7 2h, 400°C ng/g |
|---|---|---|---|
| TetraCDD | 4.6 | 0.17 | 0.23 |
| PentaCDD | 13.3 | 0.10 | n.n. |
| HexaCDD | 18.5 | n.n. | n.n. |
| HeptaCDD | 22.4 | 0.02 | n.n. |
| OctaCDD | 19.6 | 0.02 | n.n. |
| Summe PCDD | 78.4 | 0.31 | 0.23 |
| TetraCDF | 33.7 | 3.60 | 4.24 |
| PentaCDF | 35.5 | 1.00 | 1.16 |
| HexaCDF | 19.7 | 0.13 | 0.10 |
| HeptaCDF | 11.5 | n.n. | n.n. |
| OctaCDF | 2.5 | n.n. | n.n. |
| Summe PCDF | 102.9 | 4.73 | 5.50 |

Die Nachweisgrenze pro Einzelkomponente lag bei 0.01 ng/g.

## Tabelle 2

### Isomerenspezifische Bestimmung der 2,3,7,8-substituierten Tetra- bis Heptachlordibenzodioxine und -furane

Probenart: Flugasche, Kessel 27, vom 07.01.87

| Probennr. | MKS5 unbeh. ng/g | MKS6 1h,400°C ng/g | MKS7 2h,400°C ng/g |
|---|---|---|---|
| 2,3,7,8-TetraCDD | 0.22 | 0.01 | 0.02 |
| 1,2,3,7,8-PentaCDD | 1.04 | 0.01 | n.n. |
| 1,2,3,4,7,8-HexaCDD | 0.99 | n.n. | n.n. |
| 1,2,3,6,7,8-HexaCDD | 1.82 | n.n. | n.n. |
| 1,2,3,7,8,9-HexaCDD | 1.32 | n.n. | n.n. |
| 1,2,3,4,6,7,8-HeptaCDD | 11.33 | 0.01 | n.n. |
| 2,3,7,8-TetraCDF | 0.86 | 0.09 | 0.11 |
| 1,2,3,7,8-PentaCDF | 2.61 | 0.43 | 0.10 |
| 2,3,4,7,8-PentaCDF | 1.87 | 0.04 | 0.05 |
| 1,2,3,4,7,8-HexaCDF | 2.28 | 0.02 | 0.02 |
| 1,2,3,6,7,8-HexaCDF | 2.40 | 0.02 | 0.02 |
| 1,2,3,7,8,9-HexaCDF | 0.25 | n.n. | n.n. |
| 2,3,4,6,7,8-HexaCDF | 1.71 | 0.01 | n.n. |
| 1,2,3,4,6,7,8-HeptaCDF | 8.87 | n.n. | n.n. |
| 1,2,3,4,7,8,9-HeptaCDF | 0.66 | n.n. | n.n. |

In dem Ausführungsbeispiel von Fig. 1 weist das erste Rohr 15 eine Länge von 2 m und einen Durchmesser von 0,3 m auf. Die Welle 33 dreht sich einmal in 2,5 min. Durch die Kühlung 32 der Austragvorichtung 14 wird die Flugasche auf unter 200° C abgekühlt. Bei diesen Betriebsbedingungen kann eine Zerstörung der in den Flugaschen vorhandenen PCDD/PCDF-Schadstoffe erreicht werden. Die bei diesen Temperaturen auftretenden Materialbelastungen sind bei Verwendung von Qualitätsstählen gering, so daß eine hohe Lebensdauer der Einrichtung zu erwarten ist. Bei einer Erhöhung der Temperatur im Innenraum 18 kann die Verweildauer abgekürzt werden, da die katalytischen Zerstörungsprozesse mit zunehmender Temperatur schneller verlaufen. Das bedeutet, die zuvor beschrieben Vorrichtung kann dann mit einem höheren Durchsatz gefahren werden. Niedere Temperaturen, 250° C, erfordern eine längere Verweildauer der Flugasche im Innenraum 18. Durch Anpassen der Dimension der erfindungsgemäßen Einrichtung an die jeweils anfallende Flugaschenmenge in einer Abfallverbrennungsanlage, kann unter optimaler Relation zwischen Temperatur und Verweildauer eine jeweils sichere und materialschonende und deswegen besonders kostengünstige Zerstörung der Schadstoffe durchgeführt werden.

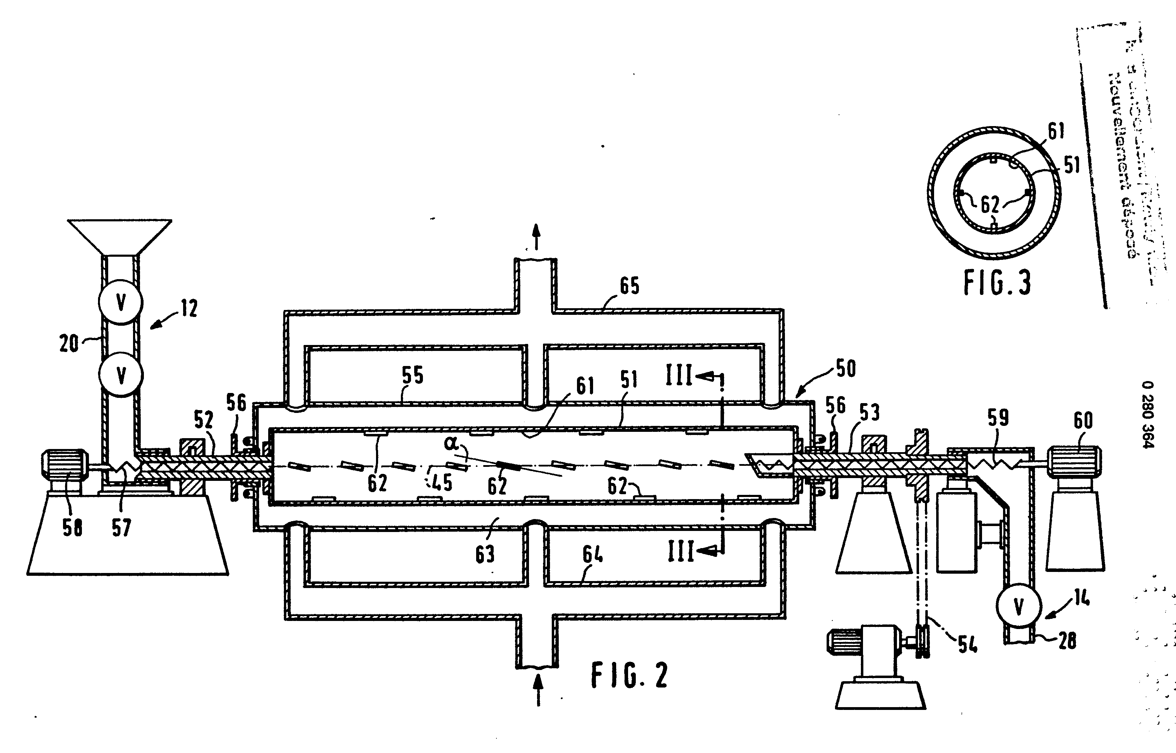

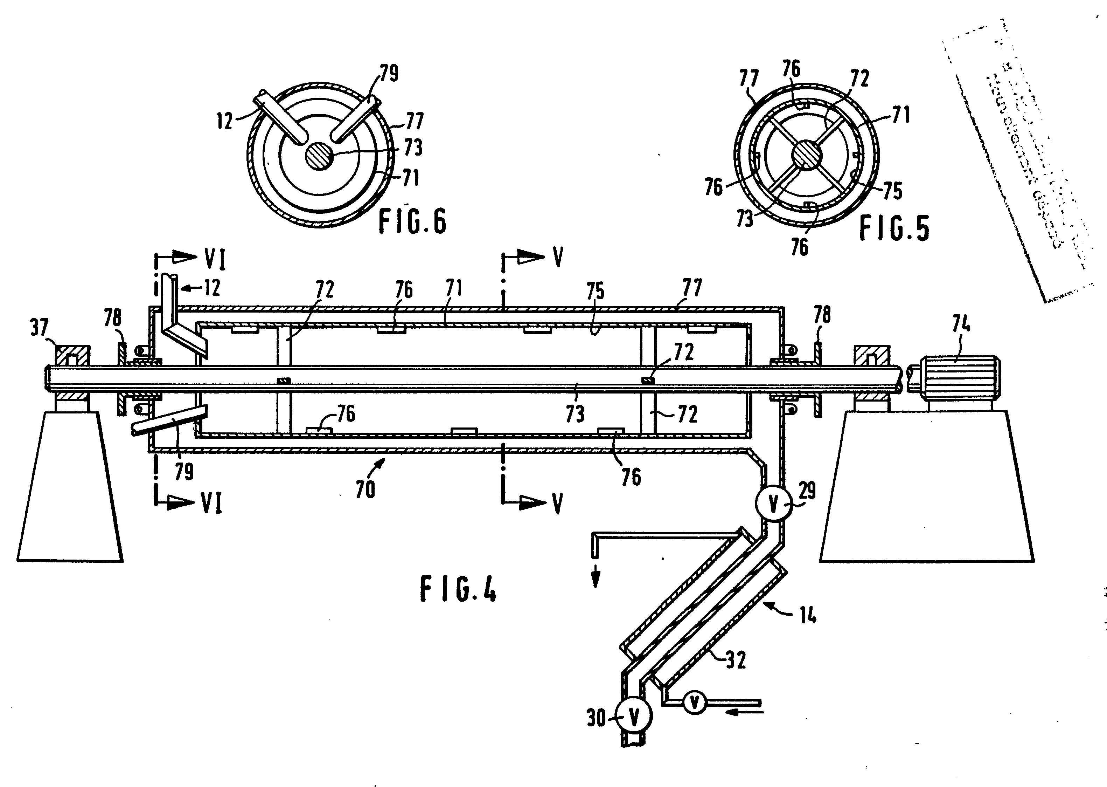

Bei dem in Fig. 2 und 3 aufgezeigten Ausführungsbeispiel weist eine Behälter 50 ein drehbares erstes Rohr 51 auf, das an seiner einen Stirnseite, die gleichzeitig die Eintragseite darstellt, mit einer Hohlwelle 52 und an der anderen, der Austragstirnseite, mit einer Hohlwelle 53 fest verbunden ist. Die Hohlwelle 53 am Austragende ist über einen regelbaren Riementrieb 54 antreibbar. Das erste innere Rohr 51 ist koaxial von einem ortsfesten zweiten Rohr 55 größeren Durchmessers umgeben. Die erste bzw. zweite Hohlwelle 52 bzw. 53 durchstoßen die geschlossenen Stirnseiten des zweiten Rohrs 55 und sind mit diesem, wie zuvor unter Fig. 1 beschrieben, über Dichtungen 56, wie Gleitringdichtungen oder Stopfbuchsen, verbunden.

Die Eintragvorrichtung 12, deren Schleuse 20 gleichermaßen wie im Zusammenhang mit Fig. 1 beschrieben aufgebaut ist, weist am unteren Ende eine Schnecke 57 auf, die koaxial in der Hohlwelle 52 verläuft und über einen regelbaren Motor 58 angetrieben wird. Die Austragvorrichtung 14 am Ende des ersten Rohres 51, deren Schleuse 28 ebenfalls wie zuvor beschrieben aufgebaut ist, enthält eine in der Hohlwelle 53 koaxial angeordnete Schnecke 59, die über einen regelbaren Motor 60 angetrieben wird.

Das erste Rohr 51 weist an seiner Innenfläche 61 angeordnete Paddel 62 auf. In dem in Fig. 2 aufgezeigten Ausführungsbeispiel ist nur eine Art an Paddel 62 an der Innenseite des ersten Rohres 51 vorgesehen. Die Paddel 62 sind dabei, wie aus Fig. 2 zu entnehmen, gleichfalls aus der Richtung der Längsachse 45 des Rohres 51 verdreht, wobei der Drehwinkel α ca. 10° beträgt.

In Längsrichtung des Rohres 51 gesehen (Fig. 3), sind die Paddel 62 jeweils um 90° versetzt an der Innenfläche 61 angeordnet. In Längsrichtung ist ein Paddel 62 gegenüber dem vorgehenden etwa um dessen Längenmaß versetzt. Die Paddel 62 dienen zur Auflockerung und Durchwirbelung der im Rohr 51 aufgenommenen Flugasche. Der Transport durch das Rohr 51 erfolgt dadurch, daß die gesamte Einrichtung geneigt angeordnet ist. In einem weiteren, hier nicht aufgezeigten Ausführungsbeispiel, sind auf der Innenfläche 61 des Rohres 51 Paddel in Paddelpaaren angeordnet, deren Aufbau und Anordnung der des in Fig. 1 beschriebenen Ausführungsbeispiels entsprechen. Die Paddel sind dabei nicht an der Welle 33, wie in Fig. 1 beschrieben, sondern an ihrem entgegengesetzten Ende mit der Innenfläche des Rohres verbunden.

Der zwischen dem ersten Rohr 51 und dem zweiten Rohr 55 gebildete Raum 63 dient weiderum zur Aufnahme des Heizmediums. Das Heizmedium, z.B. Rauchgase aus einem Heizkessel einer Abfallverbrennungsanlage, wird über eine Dreiergabel 64 dem Raum 63 zugeführt und über eine Dreiergabel 65 weider abgeführt.

Je nach Länge des ersten bzw. zweiten Rohres 51 bzw. 55 sind Stützmaßnahmen im Rohrbereich vorgesehen, damit kein Durchhängen auftreten kann.

Bei dem in den Fig. 4 bis 6 aufgezeigten Ausführungsbeispiel weist ein Behälter 70 ein erstes Rohr 71 auf, das über Stege 72 mit einer Welle 73 verbunden ist, die über ein Motor 74 antreibbar ist. Das an den Stirnseiten offene erste Rohr 71 weist an seiner Innenfläche 75 angeordnete Paddel 76 auf. Das erste Rohr 71 ist von einem zweiten ortsfesten Rohr 77 umgeben, dessen geschlossene Stirnseiten von der Welle 73 durchdrungen werden. Die Welle 73 ist über Dichtungen 78, wie Gleitringdichtungen oder Stopfbuchsen, in den Stirnseiten des zweiten Rohres 77 gelagert. Das untere Ende der Eintragvorrichtung 12 reicht durch das zweite Rohr 77 hindurch und ragt durch die offene Stirnfläche in das erste Rohr 71 hinein. Ebenfalls am Eintragende ist ein Brenner 79 angeordnet, der seine heißen Verbrennungsgase direkt in den Innenraum des ersten Rohres 71 abgibt. Die Verbrennungsgase sind dabei so gehalten, daß sie keinen Sauerstoff enthalten. An einer geeigneten Stelle des zweiten Rohres 77 (hier nicht aufgezeigt) ist ein Überdruckventil zum Austritt der Verbrennungsgase vorgesehen. Diese Ausführung kann dann eingesetzt werden, wenn kein geeignetes Heizmedium, wie bspw. heiße Verbrennungsgase aus einem Heizkessel einer Müllverbrennungsanlage, zur Verfügung steht.

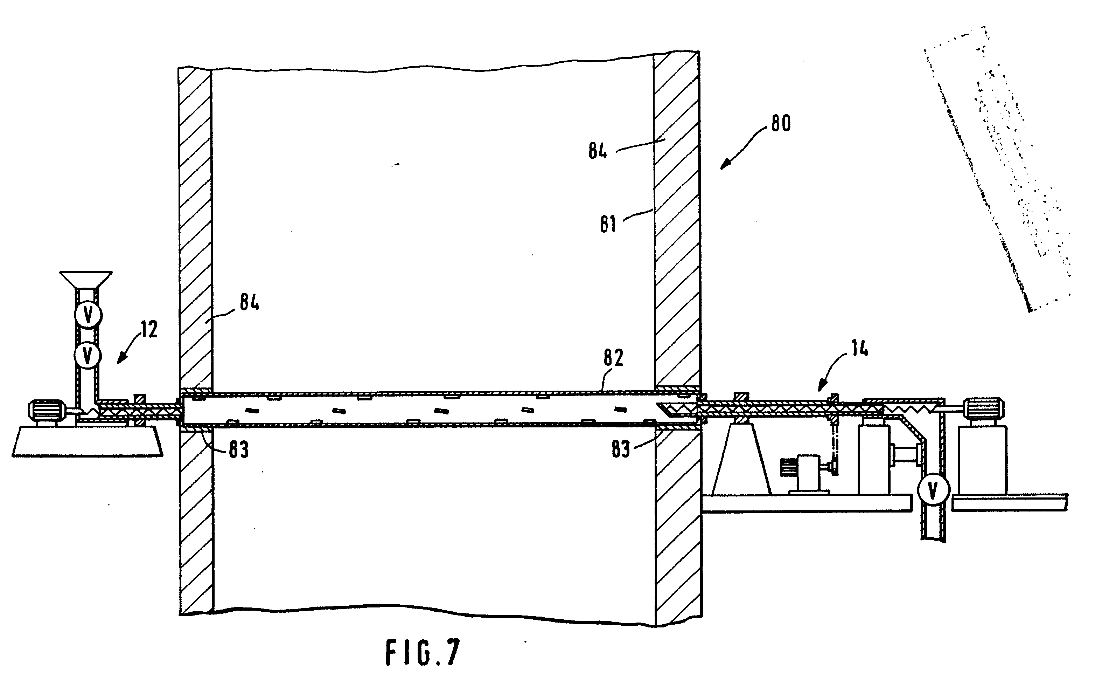

Bei dem in Fig. 7 aufgezeigten Ausführungsbeispiel besteht ein Behälter 80 aus einem Heizkessel 81, in dem ein erstes Rohr 82 angeordnet ist. Das erste Rohr 82 ist über Lager 83 drehbar in einer Wandung 84 des Heizkessels 81 gelagert. Die Eintragvorrichtung 12 und die Austragvorrichtung 14 entspricht der in Fig. 2 beschriebenen Ausführung. Diese besonders kostengünstige Ausführung nutzt die im Heizkessel 81 in Richtung Kamin strömenden Gase, wobei durch geeignete Anordnung im Heizkessel 81 die gewünschte Betriebstemperatur im ersten Rohr 82 erhalten wird. Die Anordnung der Paddel im Rohr 83 ist nur skizzenhaft und kann je nach Anordnung des Rohres, d.h., ob das Rohr waagrecht oder geneigt angeordnet ist, nur Paddel zur Durchmischung oder auch Paddel zur Durchmischung und zum Weitertransport aufweisen.

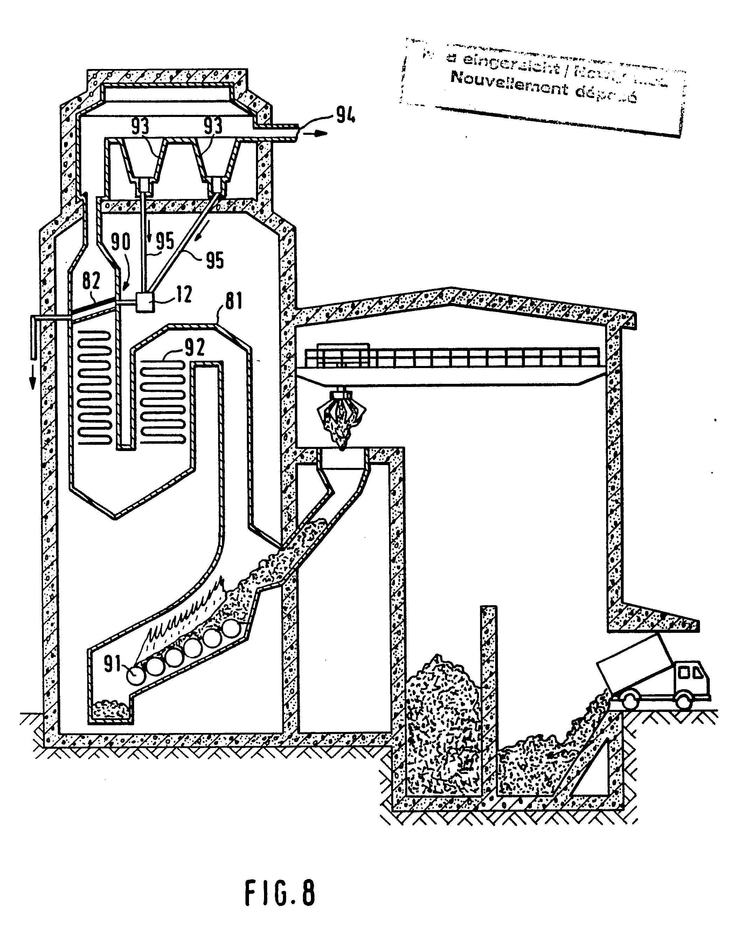

In Fig. 8 ist schematisch ein Schnitt durch eine Müllverbrennungsanlage aufgezeigt. Der erfindungsgemäße Behälter 90 besteht dabei, wie unter Fig. 7 beschrieben, aus einem Heizkessel 81 einer Müllverbrennungsanlage und einem Rohr 82 zur Aufnahme der Flugasche. Das Rohr 82 ist geneigt angeordnet, so daß die Förderung von Flugasche durch die Schwerkraft unterstützt wird. Der Neigungswinkel beträgt etwa 10°. Das Rohr 82 ist dabei derart im Heizkessel angeordnet, daß durch die an ihm vorbeiströmenden Rauchgase eine Temperatur von etwa 350° C im ersten Rohr 82 erhalten wird. Die Feuertemperatur über dem Müllrost 91 beträgt etwa 1000° bis 1200° C. Die heißen Rauchgase geben einen Teil ihrer Wärmeenergie im Heizkessel 81 an Wärmeaustauscher 92 ab, und besitzen im Bereich des Rohres 82 eine Temperatur von ca. 400° bis 450° C. Am oberen Ende des Heizkessel 81 wird mittels Elektrofilter 93 die Flugasche von den Rauchgasen, die anschließend einer Rauchgaswaschanlage 94 zugeführt werden, abgetrennt. Die Flugasche wird am unteren Ende der Elektrofilter 93 gesammelt und über Leitungen 95 der Eintragvorrichtung 12 zugeführt. Die Flugasche besitzt dabei eine Temperatur von ca. 250° bis 270°, so daß im Falle eines sofortigen Verbringens der gesammelten Flugasche in die erfindungsgemäße Einrichtung, diese nur nocht geringfügig auf die Betriebstemperatur von bspw. 350° gebracht werden muß. Nach Durchlaufen des Rohres 82 wird die von den Giftstoffen befreite Flugasche nach Abkühlung zur Endlagerung weitergeführt.

Gasförmige Stoffe, wie HCl, HF oder dgl. die bei dem Abbauprozeß im Rohr 82 entstehen, können direkt der Rauchgaswaschanlage 94 zugeführt und dort ausgewaschen werden.

Flugasche, die eine erfindungsgemäße Einrichtung passiert hat, ist von den Dioxinen bzw. Furanen befreit, so daß sie auf gewöhnlichen Deponien endgelagert gelagert werden kann.

## Ansprüche

1. Einrichtung zur Zerstörung von halogenierten Aromaten, wie chlorierte Dibenzodixine, chlorierte Dibenzofurane oder dgl. in Flugaschen aus Abfallverbrennungsanlagen, **dadurch gekennzeichnet,** daß ein Behälter (10,50,70,90) und eine Fördervorrichtung (11) zum Transport von Flugasche durch einen Raum (18) des Behälters (10,50,70,90) vorgesehen ist, daß der Raum (18) des Behälters (10,50,70,90) von der äußeren Atmosphäre abgeschlossen und auf einer Temperatur im Bereich zwischen 250° bis 450° C gehalten ist, wobei die Temperatur und die Verweildauer der Flugasche im Raum (18) so haltbar ist, daß eine Zerstörung der halogenierten Aromaten erfolgt.

2. Einrichtung nach Anspruch 1, dadurch gekennzeichnet, daß die Fördervorrichtung (11) aus einer Eintrag-(12) und Austragvorrichtung (14) und einer Transportvorrichtung (13) besteht.

3. Einrichtung nach Anspruch 2, dadurch gekennzeichnet, daß die Eintragvorrichtung (12) einen Vorratsbehälter (19), eine senkrecht darunter angeordnete Schleuse (20) mit zwei Absperrorganen (22,23), sowie einer daran anschließenden Verbindung (21) zum Raum (18) des Behälters (10,50,70,90) aufweist, wobei die Absperrorgane (22,23) so schaltbar sind, daß der Raum (18) immer von der äußeren Atmosphäre abeschlossen ist.

4. Einrichtung nach Anspruch 2 oder 3, dadurch gekennzeichnet, daß die Austragvorrichtung (14) eine Schleuse (28) aufweist, deren Absperrorgane (29,30) so schaltbar sind, daß der Raum (18) immer von der äußeren Atmosphäre abgeschlossen ist, und daß die Austragvorrichtung (14) in einem Schleusenbereich (31) mit einer Kühlung (32) versehen ist.

5. Einrichtung nach Anspruch 1 oder einem der folgenden, dadurch gekennzeichnet, daß der Behälter (10,50,70,90) ein erstes Rohr (15,51,71) aufweist, dessen eines Ende (25) mit der Eintragvorrichtung (12) und dessen anderes Ende (26) mit der Austragvorrichtung (14) verbunden ist, wobei ein Innenraum des ersten Rohres (15,51,71) den Raum (18) des Behälters darstellt.

6. Einrichtung nach Anspruch 5, dadurch gekennzeichnet, daß das erste Rohr (15,51,71) geneigt angeordnet ist.

7. Einrichtung nach Anspruch 5 oder einem der folgenden, dadurch gekennzeichnet, daß die Transportvorrichtung (13) durch eine im ersten Rohr (15) verlaufende antreibbare Welle (33) besteht, auf der Paddel (39,40) zur Durchmischung im und Förderung durch das Rohr (15) angeordnet sind.

8. Einrichtung nach Anspruch 7, dadurch gekennzeichnet, daß mehrfach aufeinanderfolgend jeweils zwei Paddel (39,40) um 180° gegenüberliegend auf der Welle (33) angeordnet sind, und daß in Achsrichtung gesehen, ein nachfolgendes Paddelpaar um 90° in Drehrichtung der Welle (33) gegenüber dem vorlaufenden Paar verdreht angeordnet ist.

9. Einrichtung nach Anspruch 8, dadurch gekennzeichnet, daß ein erstes Paddel (39) eines jeden Paddelpaares aus einer Ebene, die durch die Längsachse (45) der Welle (33) und einer senkrecht dazu stehenden Achse, die die Längsmittelachse (41) der Paddel (39,40) darstellt, gebildet wird, um etwa 10° um diese Längsmittelachse (41) und das zweite Paddel (40) um etwa 60° verdreht angeordnet ist.

10. Einrichtung nach Anspruch 9, dadurch gekennzeichnet, daß ausgehend von einem Paddelpaar, das diesem in Längsrichtung der Welle (33) folgende vierte Paddelpaar weider die gleiche Paddelanordnung aufweist.

11. Einrichtung nach Anspruch 5 oder einem der folgenden, dadurch gekennzeichnet, daß das Rohr (15) stationär angeordnet ist und an einer Stirnfläche ein Ventil (43) aufweist, um im Innenraum entstehende gasförmige Bestandteile abzulassen.

12. Einrichtung nach Anspruch 1 oder einem der Ansprüche 2 bis 5, dadurch gekennzeichnet, daß der Behälter (50) ein an den Stirnseiten mit je einer Achswelle (52,53) versehenes drehbares erstes inneres Rohr (51) aufweist, an dessen Innenfläche (61) mehrere Paddel (62) angeordnet sind.

13. Einrichtung nach Anspruch 12, dadurch gekennzeichnet, daß die Eintrag-(12) bzw. Austragvorrichtung (14) zusätzlich Schnecken (57 bzw. 59) aufweisen, die in den als Hohlwellen (52,53) ausgebildeten Achswellen des ersten inneren Rohres (51) verlaufen.

14. Einrichtung nach Anspruch 5 oder einem der folgenden, dadurch gekennzeichnet, daß das erste Rohr (15,51) im Bereich zwischen dessen Stirnflächen in einem Heizkessel (81) einer Abfallverbrennungsanlage angeordnet ist, so daß eine äußere Beheizung direkt durch die im Heizkessel (81) strömenden Verbrennungsgase erfolgt.

15. Einrichtung nach Anspruch 5 oder einem der folgenden, dadurch gekennzeichnet, daß der Behälter (10,50) ein erstes inneres Rohr (15,51) und ein zweites koaxiales Rohr (16,55) größeren Durchmessers aufweist, wobei der zwischen dem ersten und zweiten Rohr (15,52 bzw. 16,55) gebildete Raum (17,63) von einem Heizmedium, vorzugsweise Verbrennungsgase aus Abfallverbrennungsanlagen, durchströmbar ist.

16. Einrichtung nach Anspruch 5, dadurch gekennzeichnet, daß der Behälter (70) ein erstes inneres an den Stirnseiten offenes Rohr (71) aufweist, das über Stege (72) mit einer im Rohr (71) verlaufenden drehbaren Welle (73) verbunden ist und daß ein zweites ortsfestes koaxiales abgeschlossenes Rohr (77) größeren Durchmessers vorgesehen ist, dessen Stirnseiten von der drehbaren Welle (73) durchstoßen sind, wobei der Innenraum des ersten Rohres (71) durch einen Brenner (78) direkt beheizbar ist.

FIG. 1

FIG. 3

FIG. 2

FIG.6

FIG.5

FIG.4

FIG.7

0 280 364

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 443 722 (MANGOLT et al.)<br>* Ansprüche 1-14; Seite 12, Zeile 12 - Seite 13, Zeile 9 *<br>--- | 1 | C 10 B 53/00<br>B 09 B 3/00<br>B 09 B 5/00 |
| A | US-A-4 481 891 (SHIGEO TAKESHITA)<br>* Anspruch 1; Spalte 1, Zeile 43 - Spalte 2, Zeile 6; Spalte 2, Zeilen 34-61 *<br>--- | 1 | |
| A | US-A-4 432 344 (BENNINGTON et al.)<br>* Ansprüche 1-11; Spalte 2, Zeilen 16-20 *<br>--- | 1 | |
| A | DE-A-2 922 041 (HERKO PYROLYSE)<br>* Seite 4, Zeile 23 - Seite 5, Zeile 16; Figuren 1,2 *<br>--- | 2-13,15,16 | |
| A | DE-A-2 910 996 (VOELSKOW)<br>* Anspruch 1; Figuren 1,2 *<br>----- | 14 | |

**RECHERCHIERTE SACHGEBIETE (Int. Cl.4)**

C 10 B
B 09 B
B 01 D

Der vorliegende Recherchenbericht wurde für alle Patentansprüche erstellt

| Recherchenort | Abschlußdatum der Recherche | Prüfer |
|---|---|---|
| DEN HAAG | 09-05-1988 | MEERTENS J. |